# EUROPEAN PATENT APPLICATION

(11) **EP 1 652 616 A2**
(43) Date of publication of application: **03.05.2006**
(21) Application number: 05292291.1
(22) Date of filing: 28.10.2005
(51) Int. Cl.: B23P 15/26, B23P 19/00, B21D 53/08

(54) **Temporary assembly device of heat exchanger core**

(30) Priority: 28.10.2004 JP 2004314734
(71) Applicant: Calsonic Kansei Corporation, Tokyo 164-8602 (JP)
(72) Inventor: Chikuma, Hiroshi, Nakano-ku, Tokyo 164-8602 (JP)
(74) Representative: Intes, Didier Gérard André

(57) **Abstract**

A temporary assembly device comprises a radiator tube feeder (3) feeding a radiator tube (3a) to lower claw parts (14) of a pair of carrier claws (10a, 10b) to have the radiator tube (3a) held on a set base (1), and a condenser tube feeder (5) feeding a condenser tube (5a) to upper claw parts (14) of the pair of carrier claws (10a, 10b) to have the condenser tube (5a) held on first protrusions (23) of positioning guides (25), so that the condenser tube (5a) is disposed immediately above the radiator tube (3a) with a predetermined interval therebetween. In this manner, a first heat exchanger core and a second heat exchanger core are temporarily assembled with these tubes (3a, 5a) being stacked in two tiers.

## Description

The present invention relates to a temporary assembly device of a heat exchanger core, and more particularly to the temporary assembly device of the heat exchanger core that temporarily assembles a first heat exchanger core of a first heat exchanger and a second heat exchanger core of a second heat exchanger close to and integrally with each other.

A conventional temporary assembly device of a heat exchanger core is disclosed in Japanese Patent Application Laid-open No. Hei 3-166023. In this temporary assembly device, after a bar-shaped member feeder inserts and sets both ends of reinforces and tubes forming a heat exchanger core in spiral recessed grooves, worm guides are rotated to convey the reinforces and the tubes to a fin feeder, and then the fin feeder inserts fins between the tubes and between the tubes and the reinforces.

Thereafter, while the reinforces and the tubes together with the fins are conveyed to a temporary assembly unit by the spiral recessed grooves of the worm guides, intervals between the reinforces and the tubes and the length of the fins are regulated so as to match a shape that the heat exchanger core should finally have at the time of the temporary assembly, whereby the heat exchanger core is temporarily assembled.

Japanese Patent Application Laid-open No. 2002-206875 discloses another known art of a temporary assembly device of a heat exchanger core, which assembles a condenser core and a radiator core close to and integrally with each other.

However, the former art has a problem that the device is not applicable to the temporary assembly of a heat exchanger core for arranging a condenser core and a radiator core close to and integrally with each other, since it cannot set both tubes at a predetermined interval apart from each other. This restricts design and/or production choice of arrangement of the tubes in the heat exchanger.

The latter art also has a problem that the device needs a great improvement from a conventional device to be applicable to the temporary assembly of a heat exchanger core for arranging a condenser core and a radiator core close to and integrally with each other, requiring a large space for installation. There are more problems that the device has a large number of platens and is difficult to be applied to a case where the both tubes have the same length, and thus has poor efficiency and small applicability.

The present invention was made in order to solve the above-described problems and its object is to provide a temporary assembly device of a heat exchanger core which can temporarily assemble a first heat exchanger core and a second heat exchanger core integrally with each other, more particularly, the temporary assembly device of a heat exchanger core capable of greatly improving assembly speed and assembly accuracy and having a compact size.

A temporary assembly device of a heat exchanger core temporarily assembles a first heat exchanger core of a first heat exchanger and a second heat exchanger core of a second heat exchanger close to and integrally with each other, and the device comprises a pair of conveyer worms which are rotatably disposed in parallel on both sides of a set base to face each other and to be a predetermined interval apart from each other, the conveyer worms having spiral recessed grooves extending in different spiral directions, respectively; a plurality of carrier claws each of which includes an anchor part slidable along the spiral recessed groove and an upper and a lower claw part being a predetermined interval apart from each other in a vertical direction, and the carrier claws being conveyed in a space between the pair of conveyer worms and stacked in pairs; a first heat exchanger tube feeder feeding a first heat exchanger tube; positioning guides each having a first protrusion which is formed at a position corresponding to a back of the first heat exchanger tube feeder to protrude from a space between the upper claw part and the lower claw part toward an inner side of a space between the pair of carrier claws; and a second heat exchanger tube feeder feeding a second heat exchanger tube, wherein after the first heat exchanger tube feeder feeds the first heat exchanger tube to the lower claw parts of the pair of carrier claws to have the first heat exchanger tube held on the set base, the second heat exchanger tube feeder feeds the second heat exchanger tube to the upper claw parts of the pair of carrier claws to have the second heat exchanger tube held on the first protrusions of the positioning guides so that the second heat exchanger tube is disposed immediately above and a predetermined interval apart from the first heat exchanger tube, and the first heat exchanger core and the second heat exchanger core are temporarily assembled with the first heat exchanger tube and the second heat exchanger tube being stacked in two tiers.

Therefore, the two kinds of tubes can be stacked in two tiers while being continuously conveyed via the pairs of carrier claws conveyed by the pair of conveyer worms. Consequently, it is possible to realize a temporary assembly device of a heat exchanger core capable of greatly improving assembly speed and assembly accuracy with a compact size.

Further, this temporary assembly device has wide applicability since it can be realized without any great improvement from a conventional device and is adaptable to various length and height changes of both tubes.

Preferably, the temporary assembly device further comprises a fin feeder feeding a fin, wherein the positioning guides have second protrusions which are formed at positions corresponding to a back of the fin feeder and protrude from the spaces between the upper claw parts and the lower claw parts toward the inner side of the space between the pairs of carrier claws, and wherein after the fin feeder feeds the fin to a space between sets of the first and second heat exchanger tubes adjacent in a stack direction of the pairs of carrier claws, the second protrusions compress the fin to a length that the fin should have at the time of the temporary assembly.

Accordingly, the second protrusions of the positioning guides enables the fin to be compressed without increasing the number of additional parts.

Preferably, the temporary assembly device further comprises a conveyer unit which guides the pair of carrier claws to the space between the pair of conveyer worms, and thereafter moves the carrier claws around the conveyer worms respectively to guide the carrier claws again to the space between the pair of conveyer worms.

Accordingly, the pairs of conveyer worms can be continuously guided between the conveyer worms, which brings an efficient temporary assembly of the heat exchanger core.

Preferably, the conveyer unit includes a carrier claw positioning part which controls movement trails of the pair of carrier claws in the space between the pair of conveyer worms.

Accordingly, the pair of carrier claws can be positioned with accuracy and carried between the conveyer worms, enabling the both tubes to be conveyed in an accurately positioned state.

Preferably, the positioning guides are reciprocatably provided to move from the spaces between the upper claw parts and the lower claw parts of the pair of carrier claws toward the inner side of the space between the pair of carrier claws, and wherein end portions of the positioning guides protrude toward the inner side of the space between the pair of carrier claws at the back of the first heat exchanger tube feeder to serve as the first protrusions, and protrude toward the inner side of the space between the pair of carrier claws at the back of the fin feeder to serve as the second protrusions.

Accordingly, the temporary assembly device can be adapted to various length and height changes of both tubes by changing a protruding length of the end portions of the positioning guides.

Preferably, the fin feeder is constituted of a first heat exchanger fin feeder feeding a first heat exchanger fin and a second heat exchanger fin feeder feeding a second heat exchanger fin, and wherein a partition plate is provided at a back of the first heat exchange fin feeder to be bridged between the second protrusions, and wherein after the first heat exchanger fin feeder feeds the first heat exchanger fin to a space between the sets of first and second heat exchanger tubes adjacent in the stack direction of the pairs of carrier claws to have the first heat exchanger fin held on the set base, the second heat exchanger fin feeder feeds the second heat exchanger fin to the space between the sets of the first and second heat exchanger tubes adjacent in the stack direction of the pairs of carrier claws to have the second heat exchanger fin held on the partition plate so that the second heat exchanger fin is disposed immediately above and a predetermined interval apart from the first heat exchanger fin, and the first heat exchanger core and the second heat exchanger core are temporarily assembled with the first and second heat exchanger fins being stacked in two tiers.

Accordingly, this temporary assembly device can be adopted to a temporary assembly of a heat exchanger core with a first heat exchanger core and a second heat exchanger core whose fins are different from each other.

The objects, features and advantages of the present invention will become apparent as the description proceeds when taken in conjunction with the accompanying drawings, in which:
FIG. 1 is a plane view of an entire temporary assembly device of a heat exchanger core in a first embodiment of the present invention;
FIG. 2 is an enlarged plane view of a set base with conveyor worms of the temporary assembly device shown in FIG. 1;
FIG. 3 is an enlarged plane view illustrating carrier claws of the temporary assembly device shown in FIG. 1;
FIG. 4 is a cross sectional view taken along the S4-S4 line in FIG. 3;
FIG. 5 is a cross sectional view taken along the S5-S5 line in FIG. 4;
FIG. 6 is a plane view of positioning guides of the temporary assembly device shown in FIG. 1;
FIG. 7A and FIG. 7B are diagrams illustrating how a radiator tube is inserted, FIG. 7A is a diagram showing a state before inserting, and FIG. 7B is a diagram showing a state after the inserting;
FIG. 8A and FIG. 8B are diagrams illustrating how a first protrusion of the positioning guide works, FIG. 8A is a diagram showing a state before the first protrusion overlaps an end portion of a radiator tube, and FIG. 8B is a diagram showing a state when the first protrusion overlaps the end portion of the radiator tube;
FIG. 9A and FIG. 9B are diagrams illustrating how a condenser tube is inserted, FIG. 9A is a diagram showing a state before inserting, and FIG. 9B is a diagram showing a state after the inserting;
FIG. 10 is a diagram illustrating how the both tubes are positioned;
FIG. 11 is a diagram illustrating how a heat exchanger core appears when its temporary assembly is finished in the first embodiment;
FIG. 12 is an enlarged plane view of carrier claws and positioning guides of a temporary assembly device of a heat exchanger core in a second embodiment of the present invention;
FIG. 13 is a cross sectional view taken along the S13-S13 line in FIG. 12;
FIG. 14 is a cross sectional view taken along the S14-S14 line in FIG. 12;
FIG. 15A and FIG. 15B are diagrams illustrating how a radiator tube is inserted, FIG. 15A is a diagram showing a state before inserting, and FIG. 15B is a diagram showing a state after the inserting;
FIG. 16A and FIG. 16B are diagrams illustrating how an end portion of a positioning guide is disposed, FIG. 16A is a diagram showing a state before the end portion overlaps a radiator tube, and FIG. 16B is a diagram showing a state when the end portion overlaps the radiator tube;
FIG. 17A and FIG. 17B are diagrams illustrating how a condenser tube is inserted, FIG. 17A is a diagram showing a state before inserting, and FIG. 17B is a diagram showing a state after the inserting;
FIG. 18 is a plane view of an entire temporary assembly device of a heat exchanger core in a third embodiment of the present invention;
FIG. 19 is a plane view of positioning guides and a partition plate of the third embodiment;
FIG. 20 is an enlarged side sectional view of carrier claws, illustrating how a positioning guide and a partition plate of the third embodiment are disposed;
FIG. 21A and FIG. 21B are diagrams illustrating how a radiator fin is inserted, FIG. 21 A is a diagram showing a state before inserting, and FIG. 21 B is a diagram showing a state after the inserting;
FIG. 22A and FIG. 22B are diagrams illustrating how the positioning plate is disposed, FIG. 22A is a diagram showing a state before the positioning plated is disposed, and FIG. 22B is a diagram showing a state after the positioning plate is disposed;
FIG. 23A and FIG. 23B are diagrams illustrating how a condenser fin is inserted, FIG. 23A is a diagram showing a state before inserting, and FIG. 23B is a diagram showing a state after the inserting;
FIG. 24 is a diagram showing other modified structure of a second protrusion; and
FIG. 25A to FIG. 25G are diagrams showing examples of other heat exchanger cores which are able to be manufactured with the use of the temporary assembly devices of the heat exchanger core of the embodiments.

Hereinafter, embodiments of the present invention will be described based on the drawings.

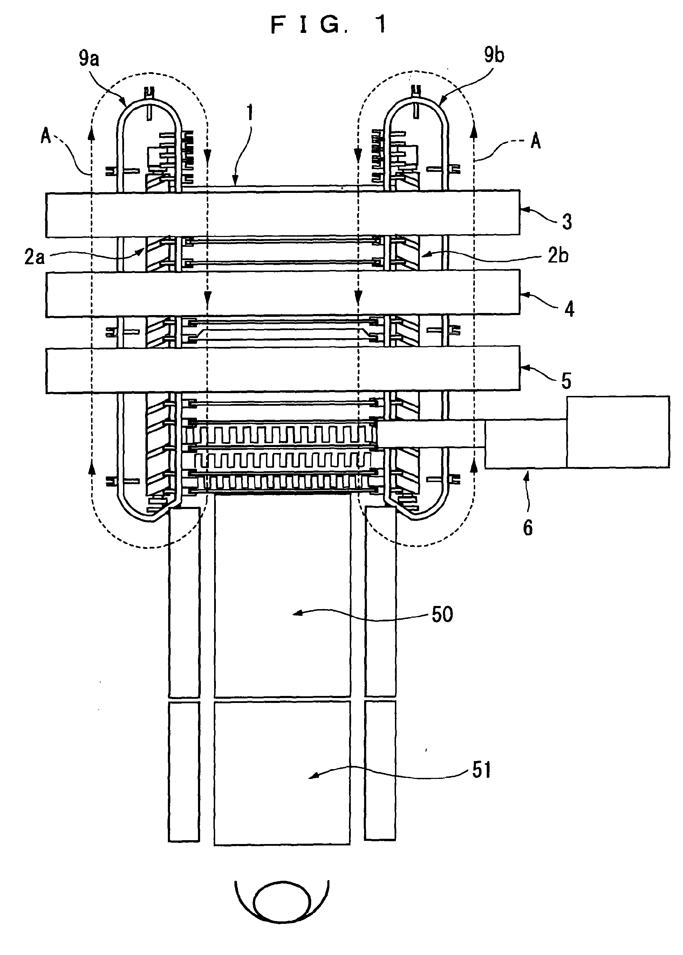

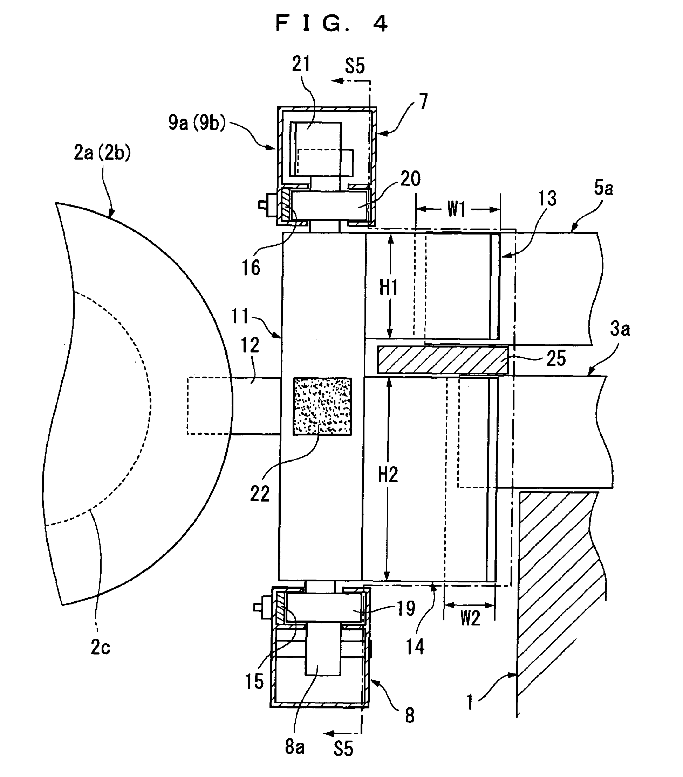

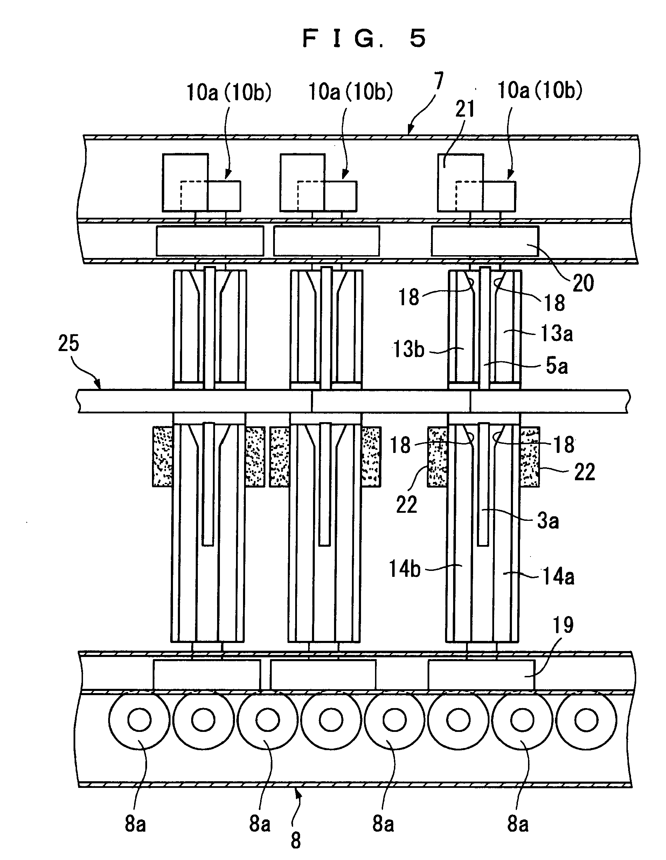

A first embodiment will be described below with reference of the accompanying drawings of FIGS. 1 to 11.

In a first embodiment, a radiator corresponds to a first heat exchanger of the present invention and a condenser corresponds to a second heat exchanger of the present invention, and this embodiment will describe a temporary assembly device of heat exchanger core which temporarily assembles a radiator tube (corresponding to a first heat exchanger tube of the present invention) of a radiator core (corresponding to a first heat exchanger core of the present invention) and a condenser tube (corresponding to a second heat exchanger tube of the present invention) of a condenser core (corresponding to a second heat exchanger core of the present invention) integrally with each other by stacking the both tubes in two tiers.

Note that common reinforces and fins are used for the radiator core and the condenser core, and the radiator tube and the condenser tube in use are the same in height but different in length. Further, all constituent components constituting the heat exchanger core are made of aluminum, and a clad layer made of a brazing filler is formed on at least one of the joint portions in each of the constituent components.

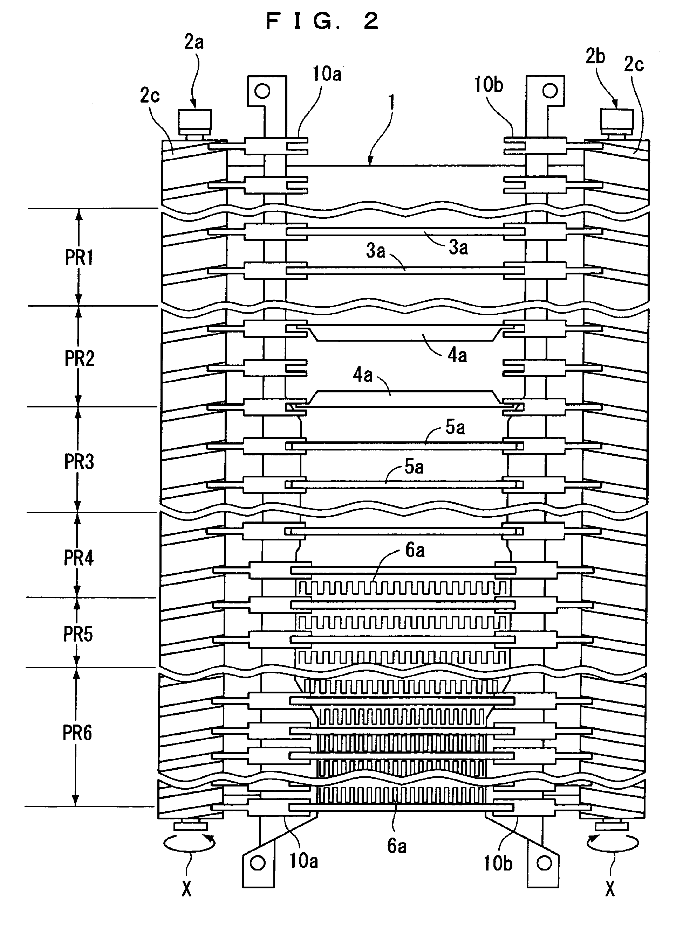

First, the entire configuration will be described. As shown in FIG. 1 and FIG. 2, the temporary assembly device of heat exchanger core of this embodiment includes a set base 1, a pair of conveyer worms 2a and 2b, a radiator tube feeder 3 (corresponding to a first heat exchanger tube feeder of the present invention), a reinforce feeder 4, a condenser tube feeder 5 (corresponding to a second heat exchanger tube feeder of the present invention), and a fin feeder 6.

The components of the heat exchanger core are temporarily assembled in a space between the later-described pair of conveyer worms 2a and 2b, and these components are placed on the set base 1 while sliding thereon. The set base 1 is made of a metal plate in a plate shape and the height of its upper face is adjustable.

The conveyer worms 2a and 2b convey carrier claws 10a and 10b in a stacked state in the space between the conveyer worms 2a and 2b. The conveyer worms 2a and 2b are disposed in parallel on both sides of the set base 1 to face each other and to be a predetermined interval apart from each other. The conveyer worms 2a and 2b have spiral recessed grooves 2c extending in different spiral directions respectively and are rotatable in the arrow X directions.

The conveyer worms 2a and 2b are surrounded respectively by conveyer rails 9a and 9b (corresponding to a conveyer unit of the present invention) in a race track shape, and each of the conveyer rails 9a and 9b includes an upper rail 7 and a lower rail 8 which will be described later.

The plural pairs of carrier claws 10a and 10b are conveyed by the conveyer worms 2a and 2b and the conveyer rails 9a and 9b while being stacked in the space between the conveyer worms 2a and 2b.

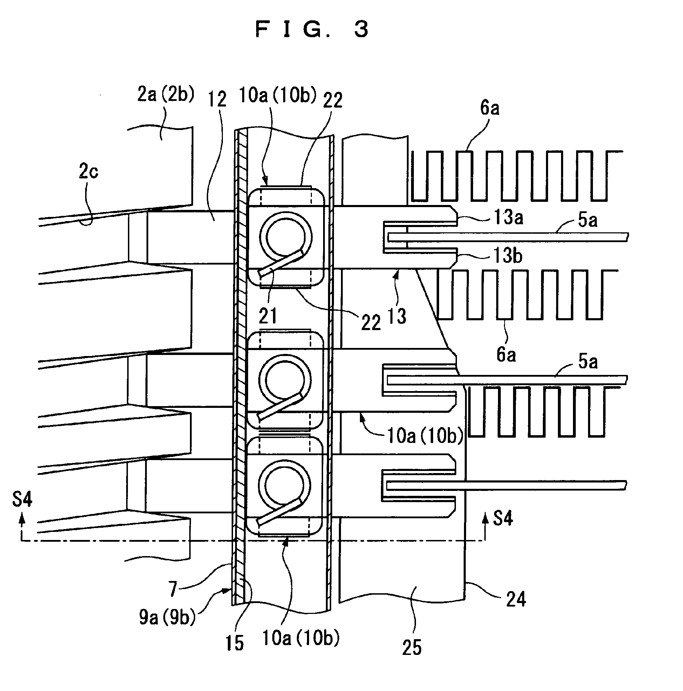

Specifically, as shown in FIG. 3 to FIG. 5, each of the carrier claws 10a (10b) has: an anchor part 12 protruding toward the conveyer worm 2a (2b) from a main body 11 of the carrier claw 10a (10b) to be anchored in the spiral recessed groove 2c; and an upper claw part 13 and a lower claw part 14 which protrude toward an inner side of a space between the pair of carrier claws 10a and 10b from the main body 11 and are a predetermined interval apart from each other in a vertical direction.

The upper claw part 13 has two holding parts 13a and 13b for holding a condenser tube 5a or a reinforce 4a therebetween for positioning. Each of the holding parts 13a and 13b has a height H1 that is substantially equal to the height of the condenser tube 5a. The lower claw part 14 has two holding parts 14a and 14b for holding a radiator tube 3a or the reinforce 4a therebetween for positioning. Each of the holding parts 14a and 14b has a height H2 that is larger than the height of the radiator tube 3a.

Since the condenser tube 5a is formed longer than the radiator tube 3a, an inside length W 1 of the holding parts 13a and 13b of the upper claw part 13 is formed longer than an inside length W2 of the holding parts 14a and 14b of the lower claw part 14. In order to facilitate inserting the condenser tube 5a, the reinforce 4a, and the radiator tube 3a from above, a slanted tapered portion 18 is formed in an end of each of the holding parts 13a, 13b, 14a, and 14b.

A slide support part 19 is provided in a bottom portion of the main body 11 of the carrier claw 10a (10b). A bottom of the slide support part 19 is slidably supported by rotary rollers 8a provided in the lower rail 8 of the conveyer rail 9a (9b) and the slide support part 19 slides while its side is positioned by a carrier claw positioning block 15 (corresponding to a carrier claw positioning part of the present invention).

A slide support part 20 is provided in an upper portion of the main body 11 of the carrier claw 10a (10b), and it slides while its side is positioned by a carrier claw positioning block 16 (corresponding to a carrier claw positioning part of the present invention).

Above the slide support part 20, a backward movement guide 21 to be described later is provided.

The main body 11 has buffer members 22 made of a resilient material such as urethane on its side faces in the stack direction of the carrier claws 10a and 10b.

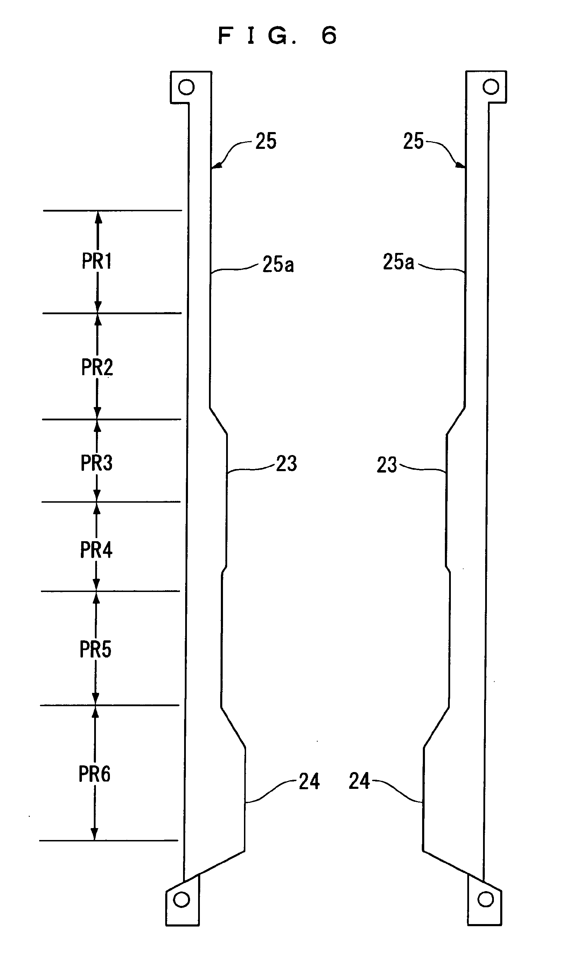

Between the upper claw parts 13 and the lower claw parts 14 of the carrier claws 10a and 10b, positioning guides 25 in a plate shape shown in FIG. 6 are disposed. An inner edge 25a of each of the positioning guides 25 has a first protrusion 23 in a trapezoidal plateau shape which is formed at a position corresponding to the back of the later-described reinforce feeder 4 to protrude toward an inner side of the space between the conveyer worms 2a and 2b. The positioning guide 25 also has a second protrusion 24 in a trapezoidal plateau shape which is formed at a position corresponding to the back of the later-described fin feeder 6 to protrude toward the inner side of the space between the conveyer worms 2a and 2b.

The radiator tube feeder 3 inserts and feeds the radiator tube 3a to spaces between the holding parts 14a and 14b of the lower claw parts 14 from above via spaces between the holding parts 13a and 13b of the upper claw parts 13 of the carrier claws 10a and 10b.

The reinforce feeder 4 inserts and feeds the reinforce 4a from above to the spaces between the holding parts 13a and 13b of the upper claw parts 13 and the spaces between the holding parts 14a and 14b of the lower claw parts 14 of the carrier claws 10a and 10b.

The condenser tube feeder 5 inserts and feeds the condenser tube 5a from above to the spaces between the holding parts 13a and 13b of the upper claw parts 13 of the carrier claws 10a and 10b.

The fin feeder 6 inserts and feeds the fin 6a produced by a corrugated fin machine from diagonally above to a space between the sets of tubes 3a and 5a adjacent to each other in the stack direction of the carrier claws 10a and 10b or to a space between the set of tubes 3a and 5a and the reinforce 4a.

Next, operation of the temporary assembly device of the first embodiment will be described.

In the temporary assembly of the heat exchanger core with the use of the temporary assembly device of heat exchanger core, the conveyer worms 2a and 2b are first rotated in the arrow X directions respectively as shown in FIG. 2 to sequentially convey the carrier claws 10a and 10b to the space between the conveyer worms 2a and 2b so that the carrier claws 10a and 10b are stacked. At this time, the anchor parts 12 of the carrier claws 10a and 10b slide while being anchored in the spiral recessed grooves 2c of the conveyer worms 2a and 2b, so that the carrier claws 10a and 10b are conveyed in the stack direction. Further, the slide support parts 19 and 20 slide along the carrier claw positioning blocks 15 and 16 of the conveyer rails 9a and 9b, so that movement trails of the carrier claws 10a and 10 are controlled.

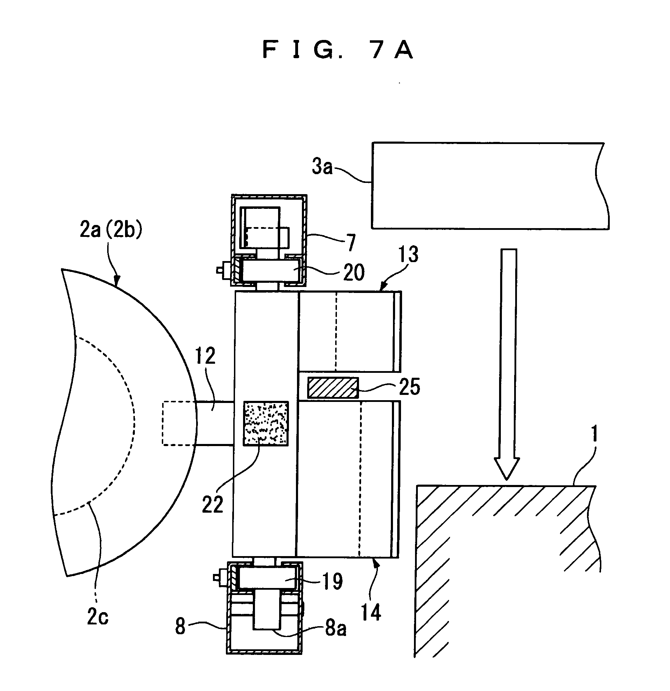

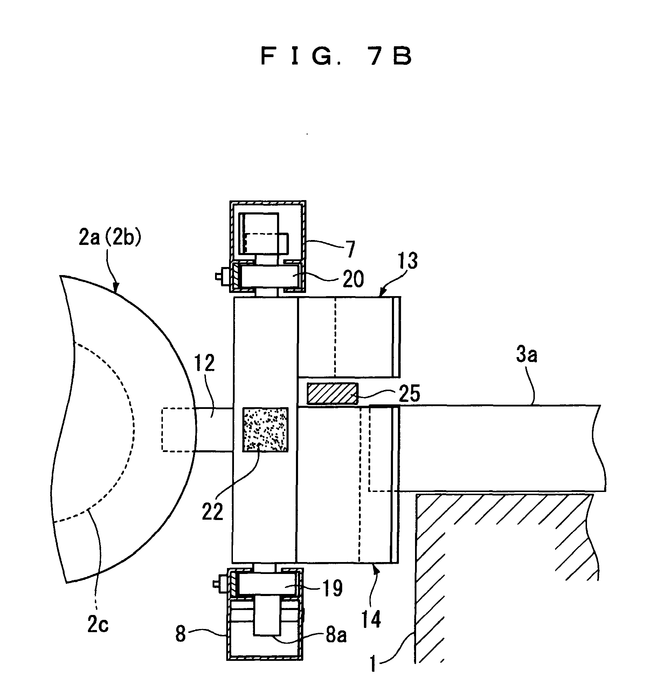

FIG. 7A and FIG. 7B show a radiator tube insertion process PR1. In this process, the radiator tube feeder 3 inserts the radiator tube 3a from above to the spaces between the holding parts 14a and 14b of the lower claw parts 14 of the carrier claws 10a and 10b via the spaces between the holding parts 13a and 13b of the upper claw parts 13 of the carrier claws 10a and 10b to have the radiator tube 3a held on the set base 1.

In a reinforce insertion process PR2, the reinforce feeder 4 inserts the reinforce 4a from above to the spaces between the holding parts 13a and 13b and between the holding parts 14a and 14b of the upper and lower claw parts 13 and 14 of the carrier claws 10 and 10b at a predetermined timing to have the reinforce 4a held on the set base 1.

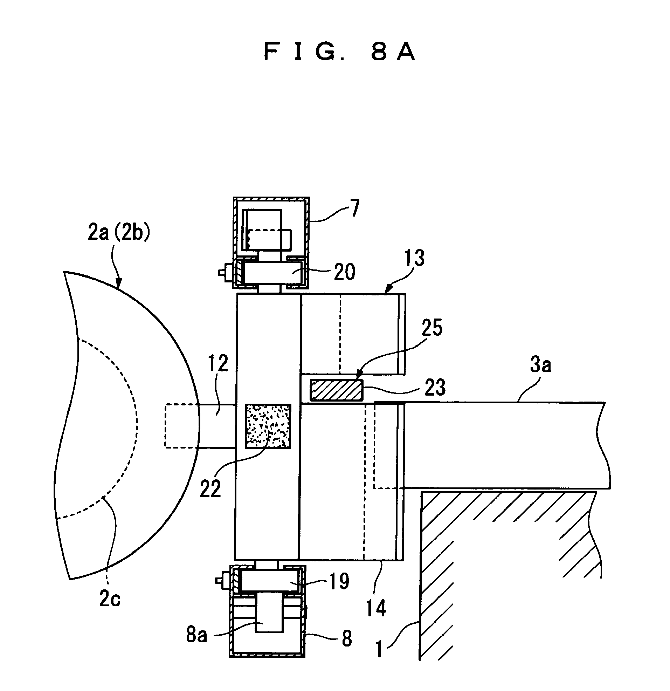

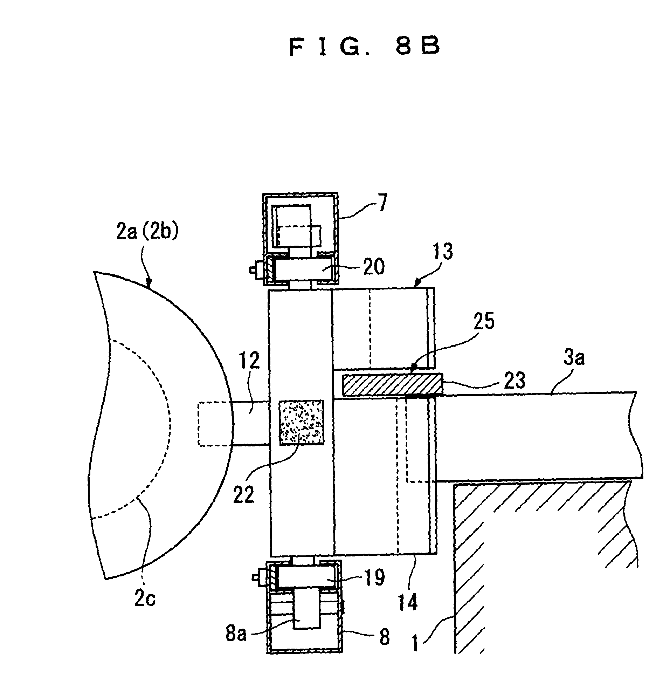

Next, as shown in FIG. 8A and FIG. 8B, at the back of the reinforce feeder 4, the first protrusions 23 of the positioning guides 25 gradually protrude above end portions of the radiator tube 3 a.

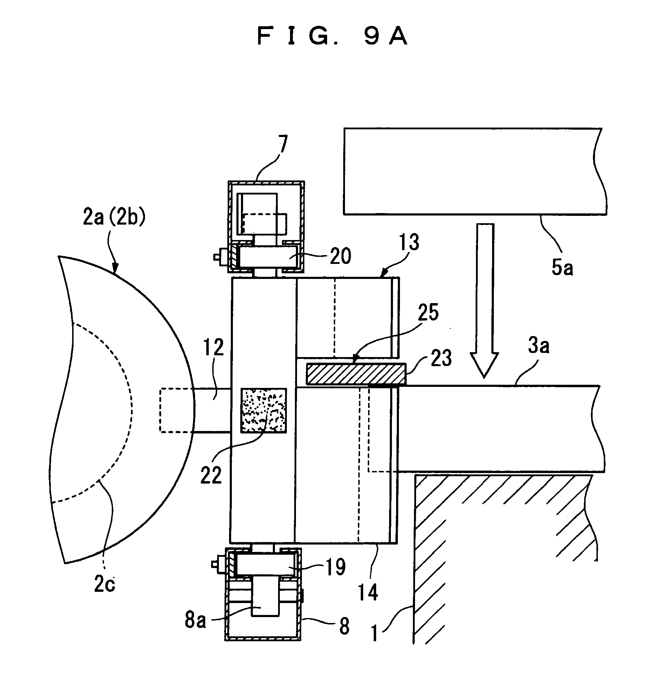

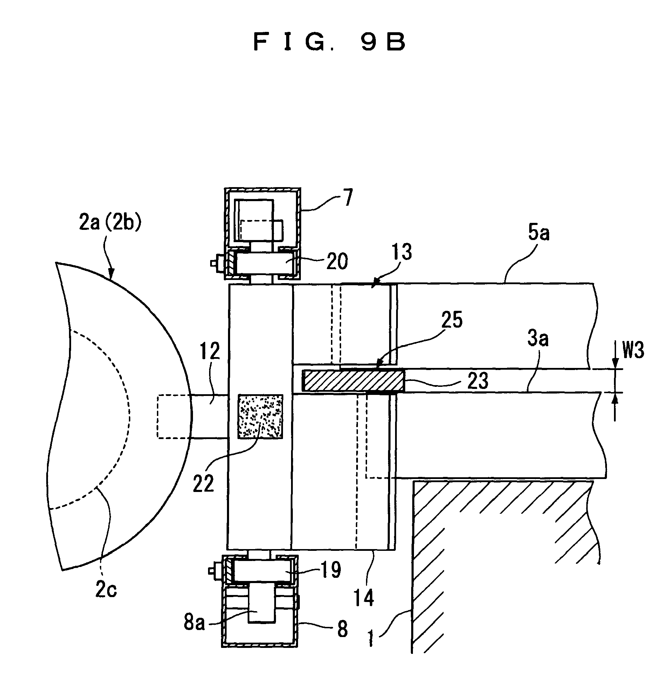

FIG. 9A and FIG. 9B show a condenser tube insertion process PR3. In this process, the condenser tube feeder 5 inserts the condenser tube 5a from above to the space between the holding parts 13a and 13b of the upper claw parts 13 of the carrier claws 10a and 10b to have the condenser tube 5a held on the first protrusions 23 of the positioning guides 25. Therefore, it is possible to dispose the condenser tube 5a immediately above the radiator tube 3a via the first protrusions 23 of the positioning guides 25, so that the tubes 3a and 5a can be transferred while being arranged in two tiers with a predetermined interval W3 therebetween.

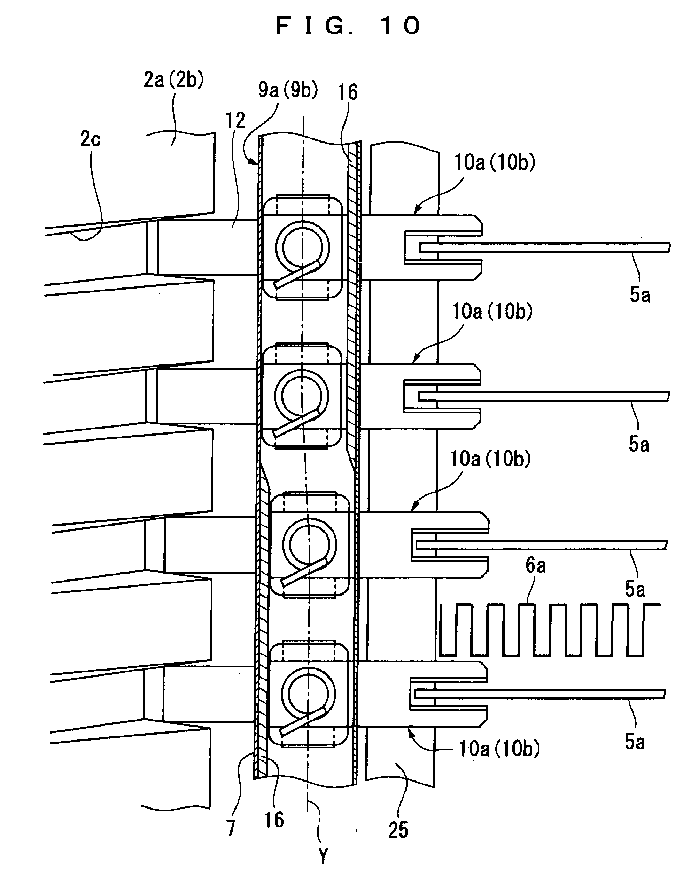

FIG. 10 shows a carrier claw positioning process PR4. In this process, at the back of the condenser tube feeder 5, the positioning blocks 16 and 15 of the upper rails 7 and the lower rails 8 of the conveyer rails 9a and 9b guide the slide support parts 20 and 19 of the carrier claws 10a and 10b toward the inner side of the space between the conveyer worms 2a and 2b to adjust an interval between the carrier claws 10a and 10b to a predetermined distance. This enables accurate positioning of the tubes 3a and 5a by the holding parts 13 and 14. This means that the conveyer rails 9a and 9b control by their positioning blocks 15 and 16 the movement trails Y of the carrier claws 10a and 10b in the space between the conveyer worms 2a and 2b.

In a fin insertion process PR5, the fin feeder 6 inserts the fin 6a from diagonally above to the space between the sets of the tubes 3a and 5a adjacent in the stack direction of the carrier claws 10a and 10b or to the space between the sets of tubes 3a and 5a and the reinforce 4a to have the fins 6a held on the set base 1.

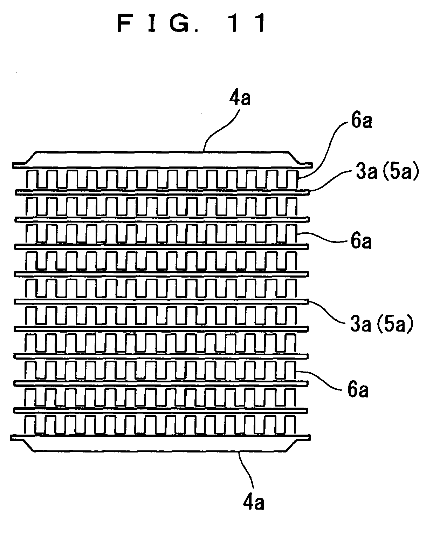

In a fin compression process PR6, at the back of the fin feeder 6, the second protrusions 24 of the positioning guides 25 gradually protrude toward the inner side of the space between the conveyer worms 2a and 2b as shown in FIG. 3, so that the fins 6a are compressed to a length that the fins 6a should have at the time of the temporary assembly. Further, at the back of the fin feeder 6, the pitch of the spiral recessed grooves 2c of the conveyer worms 2a, 2b becomes gradually narrower, so that the stack interval of the carrier claws 10a and 10b becomes narrower and thus the intervals of the tubes 3a and 5a, the fins 6a, and the reinforces 4a adjacent in the stack direction are regulated to intervals required at the time of the temporary assembly of the heat exchanger core which is to be manufactured. Through these processes, the temporary assembly of the heat exchanger core shown in FIG. 11 is finished.

At this time, the backward movement guides 21 of the carrier claws 10a and 10b slide along rails for backward movement (not shown) provided in the upper rails 7, thereby guiding the carrier claws 10a and 10b to the outer side of the conveyer worms 2a and 2b so as to make them apart from each other. This enables smooth separation of the tubes 3a and 5a and the reinforces 4a from the carrier claws 10a and 10b. Further, the main bodies 11 of the carrier claws 10a and 10b are conveyed or moved toward an upstream side (the upper side in FIG. 1) of the stack direction of the carrier claws 10a and 10b by the constantly rotating rotary rollers 8a or the like provided in the bottom portions of the conveyer rails 9a and 9b and are transferred to the space between the conveyer worms 2a and 2b again. Thus, the carrier claws 10a and 10b move around as shown by the broken line arrows A in FIG. 1. Further, owing to the buffer members 22 provided on the main bodies 11 of the carrier claws 10a and 10b, direct collision of the upper claw parts 13 and of the lower claw parts 14 is prevented even if the carrier claws 10a and 10b being conveyed come close to each other because the buffer members 22 are interposed therebetween. This can prevent the positional displacement of the transferred tubes 3a and 5a, reinforces 4a, and so on due to an unnecessary impact applied thereto.

The whole heat exchanger core temporarily assembled is compressed to a predetermined size in a core assembly unit 50 shown in FIG. 1. Thereafter, a not-shown plate, a header, and so on are assembled to the heat exchanger core in a plate/header assembly unit 51, and the heat exchanger core is brazed in a not-shown heating furnace.

Next, advantages of the first embodiment will be described.

As described above, according to the temporary assembly device of heat exchanger core of the first embodiment, the first heat exchanger core and the second heat exchanger core are temporarily assembled while the tubes are stacked in two tiers. Thus, the tubes 3a and 5a can be stacked in two tiers while being continuously transferred by the pairs of carrier claws 10a and 10b conveyed by the pair of conveyer worms 2a and 2b. Therefore, it is possible to realize a temporary assembly device of heat exchanger core capable of greatly improving assembly speed and assembly accuracy with a compact size.

Further, this temporary assembly device has wide applicability since it can be realized without any great improvement from a conventional device and is adaptable to various length and height changes of the tubes 3a and 5a.

In addition, the fin feeder 6 feeding the fin 6a is provided, and the positioning guides 25 have the second protrusions 24 which are formed at the positions corresponding to the back of the fin feeder 6 to protrude from the spaces between the upper claw parts 13 and the lower claw parts 14 toward the inner side of the space between the pair of carrier claws 10a and 10b. After the fin feeder 6 feeds the fins 6a to the spaces between the sets of tubes 3a and 5a adjacent in the stack direction of the pairs of carrier claws 10a and 10b, the second protrusions 24 compress the fins 6a to the length that the fins 6a should have at the time of the temporary assembly. Therefore, it is possible to compress the fins 6a by the second protrusions 24 of the positioning guides 25, without increasing the number of parts.

Further, the conveyer rails 9a and 9b guide the pair of carrier claws 10a and 10b to the space between the pair of the conveyer worms 2a and 2b and thereafter move the pairs of carrier claws 10a and 10b around the corresponding conveyer worms 2a and 2b to guide them again to the space between the pair of conveyer worms 2a and 2b. This makes it possible to continuously guide the pairs of carrier claws 10a and 10b to the space between the conveyer worms 2a and 2b. This enables efficient temporary assembly of the heat exchanger core.

Moreover, the conveyer rails 9a and 9b include the carrier claw positioning blocks 15 and 16 for controlling the movement trails of the pairs of carrier claws 10a and 10b in the space between the pair of conveyer worms 2a and 2b. This makes it possible to transfer the pairs of carrier claws 10a and 10b in the space between the conveyer worms 2a and 2b while the pair of carrier claws 10a and 10b are accurately positioned. Consequently, the both tubes held by the pairs of carrier claws 10a and 10b can be transferred while being accurately positioned.

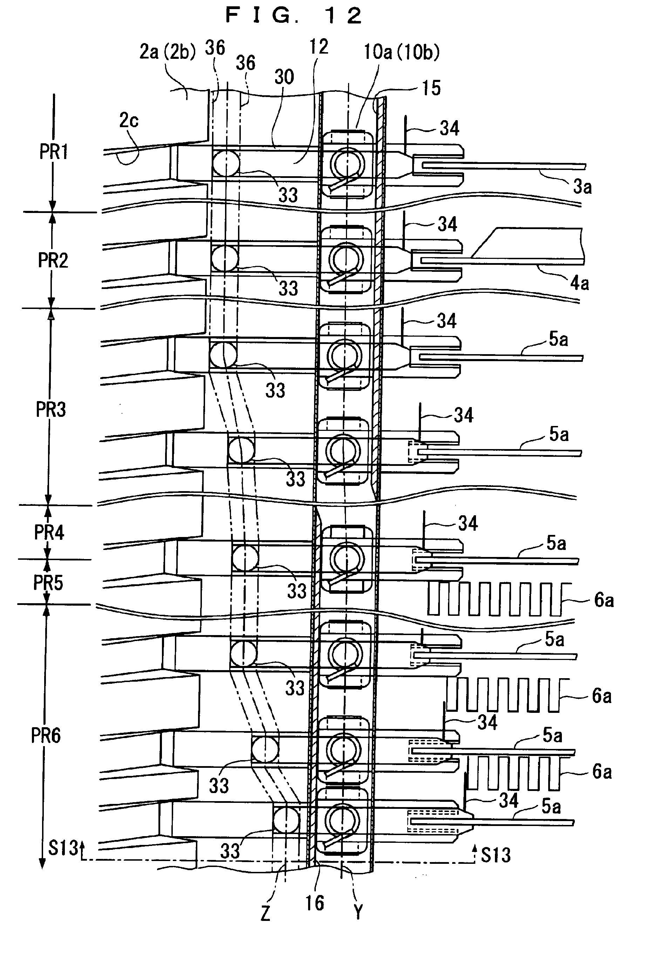

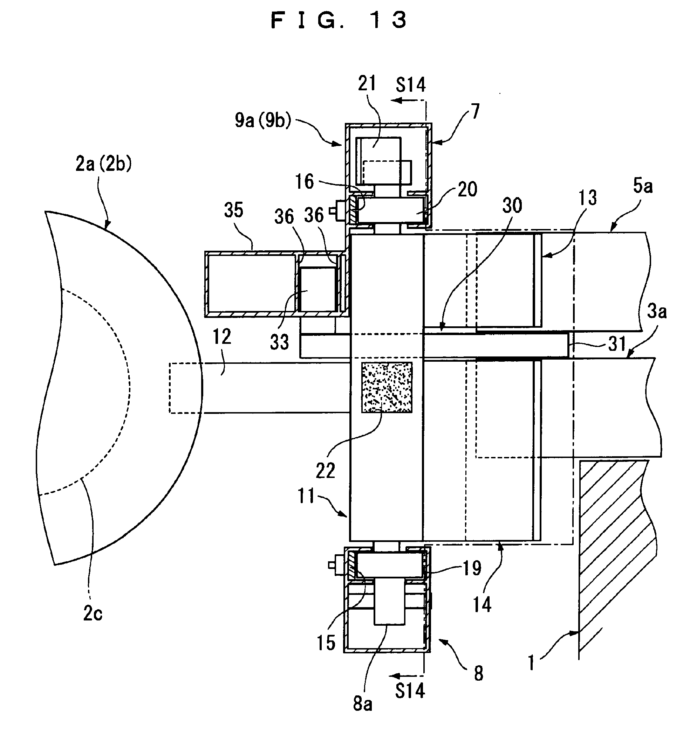

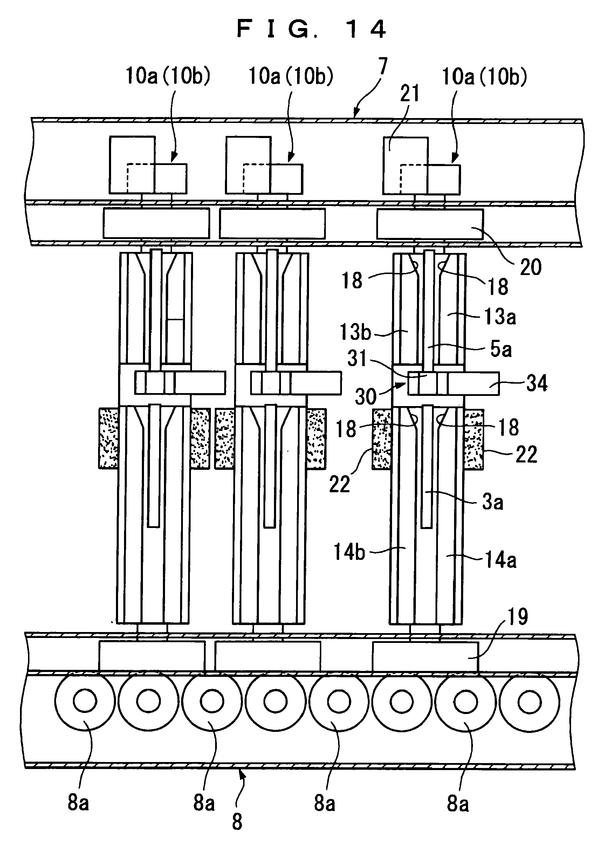

Next, a temporary assembly device of a second embodiment will be described with reference to the accompanying drawings of FIGS. 12 to 17.

In a temporary assembly device of heat exchanger core of the second embodiment, positioning guides described in the first embodiment are reciprocatably provided. Accordingly, they move from spaces between upper claw parts and lower claw parts of a pair of carrier claws toward an inner side of a space between the pair of carrier claws. By protruding toward the inner side of the space between the pair of carrier claws, end portions of the positioning guides serve as the first protrusions at the back of a first heat exchange tube feeder and as the second protrusions at the back of a fin feeder. Since the other configuration is the same as that of the first embodiment, the same reference numerals are used to designate the same constituent members as those of the first embodiment, and description thereof will be omitted. Only the differences will be described in detail.

A radiator tube and a condenser tube used in the temporary assembly device of the second embodiment are the same in height and length.

First, the whole configuration will be described. As shown in FIG. 12 to FIG. 14, in the temporary assembly device of the second embodiment, positioning guides 30 are provided in carrier claws 10a and 10b.

Specifically, each of the positioning guides 30 is reciprocatably provided inside the carrier claw 10a (10b), passing through a main body 11 of the carrier claw 10a (10b). The positioning guide 30 has, on one end side thereof, a tapered end portion 31, and has a columnar sliding pin 33 protruding from the other end side thereof.

A fin positioning part 34 protruding in a stack direction of the carrier claws 10a and 10b is provided on the end portion 31.

Each upper rail 7 has a sliding pin positioning rail 35 (corresponding to a positioning guide positioning part of the present invention) integrally formed with the upper rail 7. In the sliding pin positioning rail 35, guide walls 36 along which a slide pin 33 slides are provided. The guide walls 36 are formed in a shape matching the shape of the inner edge 25a of the positioning guide 25 described in the first embodiment. Accordingly, when the slide pin 33 reciprocates relative to the main body 11 while being guided by the guide walls 36, the end portion 31 moves so that its movement trail traces the inner edge 25a of the positioning guide 25.

Therefore, the slide pin positioning rail 35 controls a movement trail Z of the end portion 31 of the positioning guide 30 by the guide walls 36. At this time, at the back of a reinforce feeder 4, the end portion 31 of the positioning guide 30 protrudes toward an inner side of a space between the pair of carrier claws 10a and 10b to serve as the first protrusion described in the first embodiment, and at the back of a fin feeder 6, it protrudes toward the inner side of the space between the pair of carrier claws 10a and 10b to serve as the second protrusion described in the first embodiment. Note that in the second embodiment, holding parts 13a and 13b of an upper claw part 13 and holding parts 14a and 14b of a lower claw part 14 have the same inside length.

Next, operation of the second embodiment will be described.

In the temporary assembly of a heat exchanger core with the use of the temporary assembly device, conveyer worms 2a and 2b are first rotated to sequentially guide both the carrier claws 10a, 10b and the positioning guides 30 to a space between the conveyer worms 2a and 2b so that the carrier claws 10a and 10b are stacked, as shown in FIG. 12.

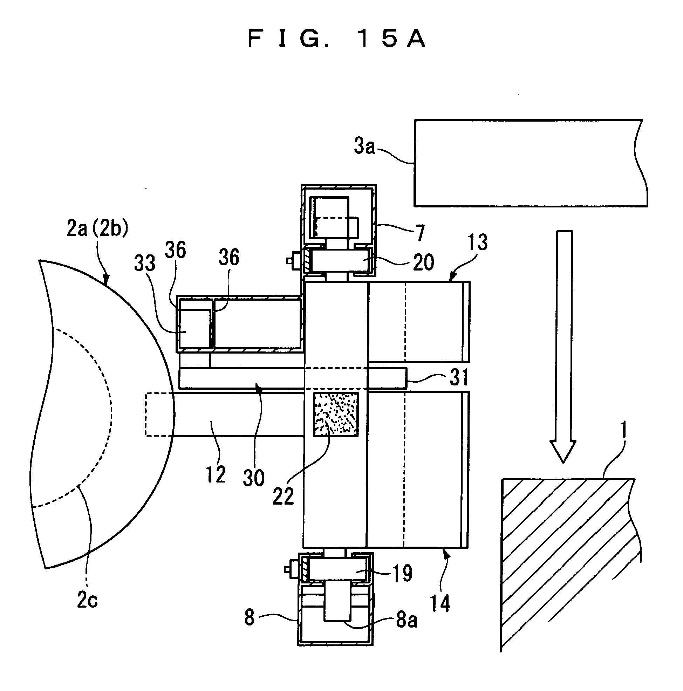

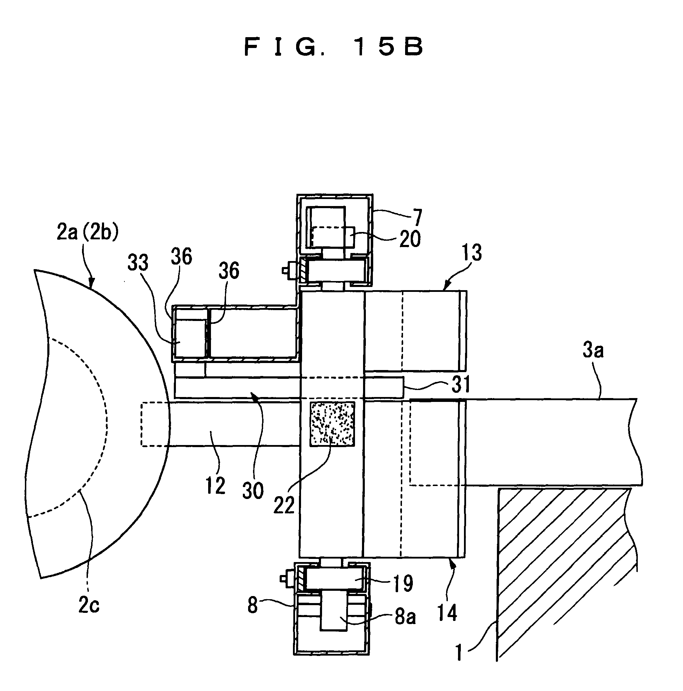

FIG. 15A and FIG. 15B show a radiator tube insertion process PR1. In this process, a radiator tube feeder 3 inserts a radiator tube 3a from above to spaces between the holding parts 14a and 14b of the lower claw parts 14 of the carrier claws 10a and 10b via spaces between the holding parts 13a and 13b of the upper claw parts 13 of the carrier claws 10a and 10b to have the radiator tube 3 a held on a set base 1.

In a reinforce insertion process PR2, at a predetermined appropriate timing, a reinforce feeder 4 inserts a reinforce 4a from above to the spaces between the holding parts 13a and 13b and between the holding parts 14a and 14b of the upper and lower claw parts 13 and 14 of the carrier claws 10a and 10b, as shown in FIG. 12, to have the reinforce 4a held on the set base 1.

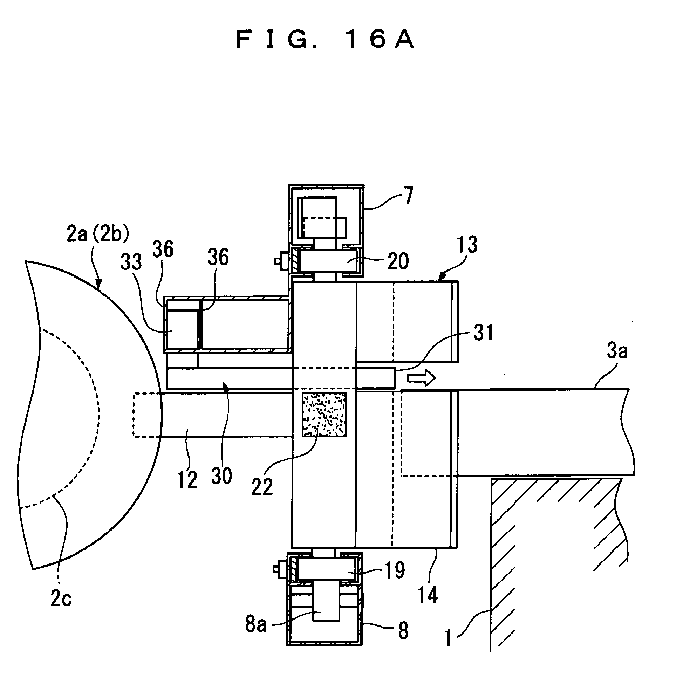

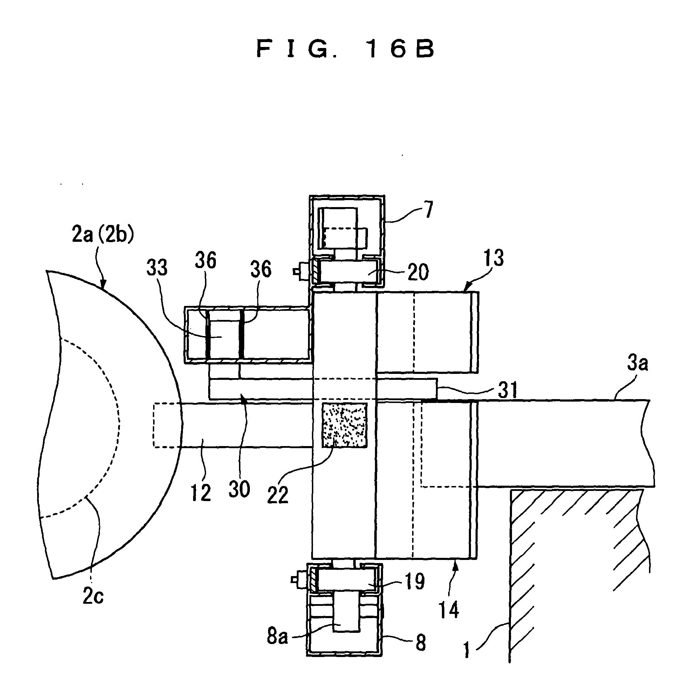

Next, as shown in FIG. 12 and FIGS. 16A and 16B, at the back of the reinforce feeder 4, the end portions 31 of the positioning guides 30 gradually protrude above end portions of the radiator tube 3a.

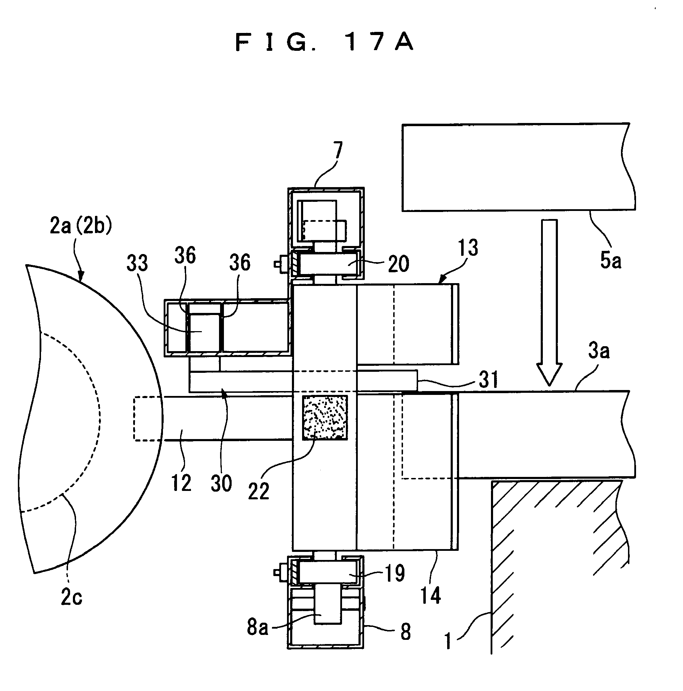

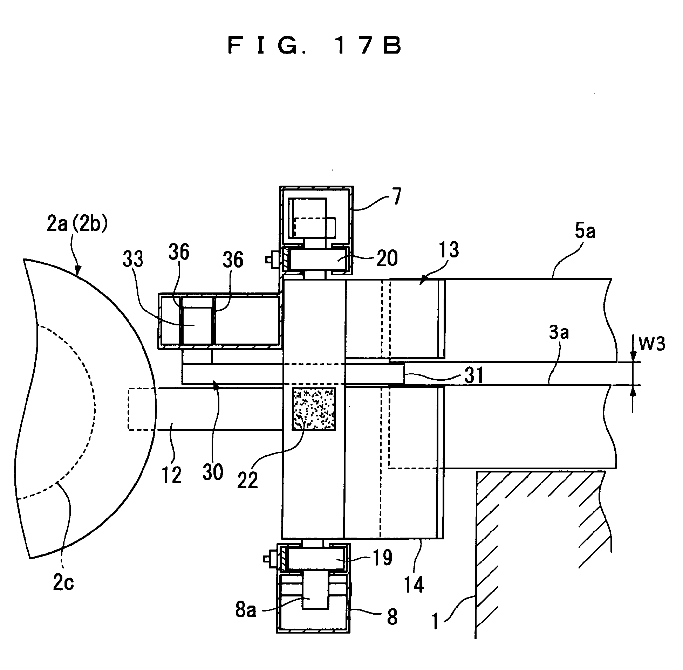

FIG. 17A and FIG. 17B show a condenser tube insertion process PR3. In this process, a condenser tube feeder 5 inserts a condenser tube 5a from above to the space between the holding parts 13a and 13b of the upper claw parts 13 of the carrier claws 10a and 10b to have the condenser tube 5a held on the end portions 31 of the positioning guides 25.

Therefore, it is possible to dispose the condenser tube 5a immediately above the radiator tube 3a via the end portions 31 of the positioning guides 25, so that the tubes 3a and 5a can be transferred while being stacked in two tiers with a predetermined interval W3 therebetween.

In a carrier claw positioning process PR4, at the back of the condenser tube feeder 5, positioning blocks 16 and 15 of the upper rails 7 and lower rails 8 of conveyer rails 9a and 9b restrict slide support parts 19 and 20 of the carrier claws 10a and 10b so that they move toward the inner side of the space between the conveyer worms 2a and 2b. Consequently, the carrier claws 10a and 10b become a predetermined interval apart from each other, which enables accurate positioning of the tubes 3a and 5a by the holding parts 13a, 13b, 14a, and 14b. This means that the conveyer rails 9a and 9b control by their positioning blocks 15 and 16 movement trails Y of the carrier claws 10a and 10b in the space between the conveyer worms 2a and 2b.

In a fin insertion process PR5, a fin feeder 6 inserts a fin 6a from diagonally above to a space between the sets of tubes 3a and 5a adjacent in the stack direction of the carrier claws 10a and 10b or to a space between the sets of tubes 3a and 5a and the reinforce 4a to have the fin 6a held on the set base 1.

In a fin compression process PR6, at the back of the fin feeder 6, the end portions 31 of the positioning guides 30 gradually protrude toward the inner side of the space between the conveyer worms 2a and 2b, so that the fin positioning parts 34 compress the fins 6a to a length that they should have at the time of the temporary assembly. Further, at the back of the fin feeder 6, the pitch of the spiral recessed grooves 2c of the conveyer worms 2a and 2b gradually becomes narrower, so that the stack interval of the carrier claws 10a and 10b becomes narrower. Consequently, the intervals of the tubes 3a and 5a, the fins 6a, and the reinforces 4a adjacent in the stack direction match intervals required at the temporary assembly of a heat exchanger core that is to be manufactured. Through these processes, the temporary assembly of the heat exchanger core shown in FIG. 11 is finished.

Next, advantages of the second embodiment will be described.

The temporary assembly device of the heat exchanger core of the second embodiment is adaptable to variations in length of the tubes 3a and 5a and fins 6a by varying the protrusion length of the end portions 31 of the positioning guides 30.

Further, the positioning guides 30 can be accurately moved in the space between the conveyer worms 2a and 2b by the slide pin positioning rails 35, so that the condenser tube 5a can be surely supported.

Further, the fin positioning parts 34 can surely and accurately compress the fins 6a to absorb variation in length of the fins 6a. This ensures a prescribed length that the fins 6a should have at the time of the temporary assembly.

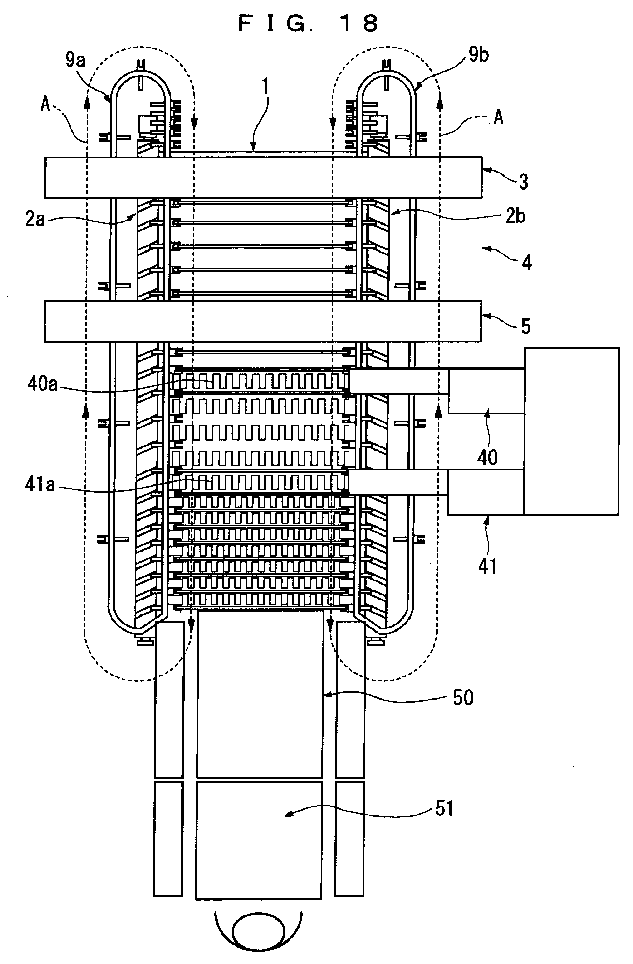

Next, a temporary assembly device of a third embodiment will be described with reference to the accompanying drawings of FIGS. 18 to 24.

In a temporary assembly device of heat exchanger core of the third embodiment, the fin feeder described in the first embodiment is constituted of a radiator fin feeder (corresponding to a first heat exchanger fin feeder of the present invention) feeding a radiator fin (corresponding to a first heat exchanger fin of the present invention) and a condenser fin feeder (corresponding to a second heat exchanger fin feeder of the present invention) feeding a condenser fin (corresponding to a second heat exchanger fin of the present invention). At the back of the radiator fin feeder, a partition plate is bridged between second protrusions. Since the other configuration is the same as that of the first embodiment, the same reference numerals are used to designate the same constituent members as those of the first embodiment and description thereof will be omitted. Only the differences will be described in detail.

As shown in FIG. 18, the temporary assembly device of heat exchanger core of the third embodiment includes a radiator fin feeder 40 feeding a radiator fin 40a and a condenser fin feeder 41 feeding a condenser fin 41 a. Since the temporary assembly of reinforces comes after a later-described condenser fin insertion process PR8, a reinforce feeder is not shown in the drawing.

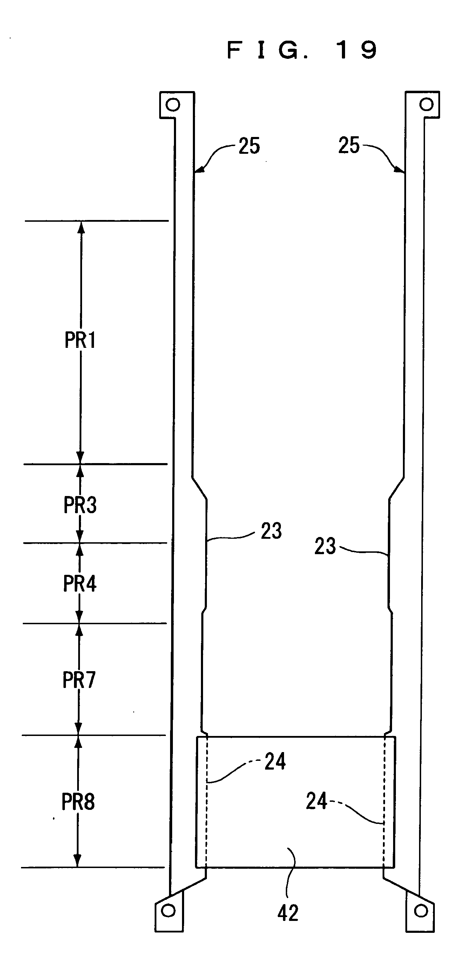

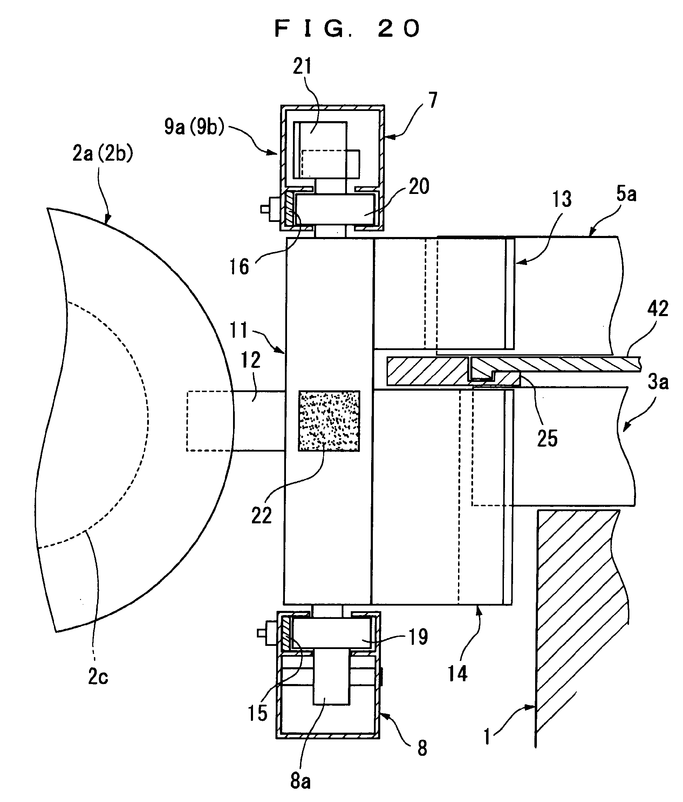

As shown in FIG. 19, a partition plate 42 is bridged between second protrusions 24 of positioning guides 25 at the back of the radiator fin feeder 40. Further, as shown in FIG. 20, an end of the second protrusion 24 and an end of the partition plate 42 are in concave/convex engagement.

Operations of the third embodiment will be described below.

The procedure of the temporary assembly of a heat exchanger core with the use of the temporary assembly device proceeds in the order of a radiator tube insertion process PR1, a condenser tube insertion process PR3, and a carrier claw positioning process PR4.

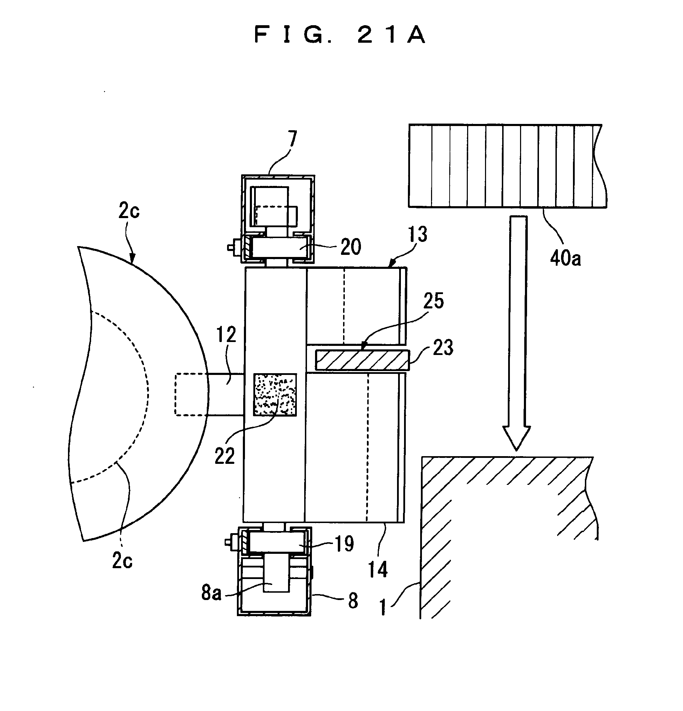

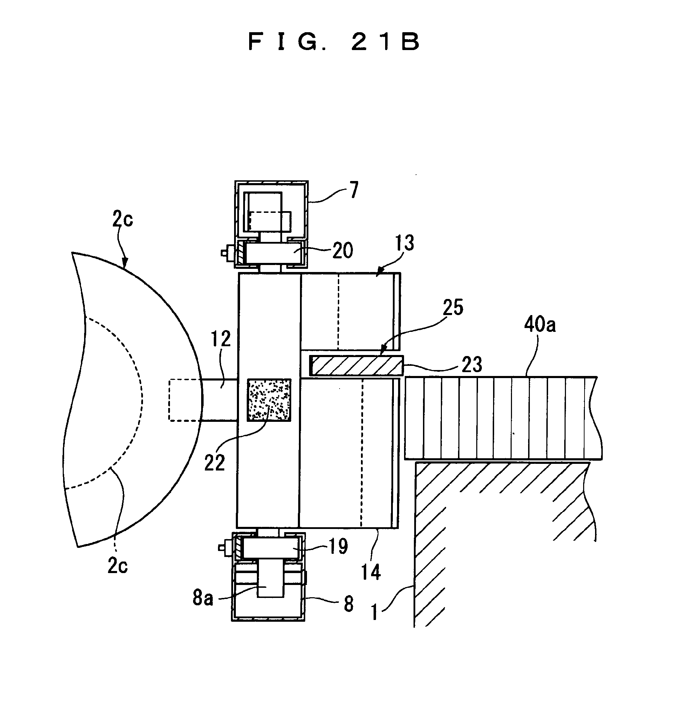

FIG. 21 A and FIG. 21B show a radiator fin insertion process PR7. In this process, the radiator fin feeder 40 inserts the radiator fin 40a from diagonally above to a space between sets of tubes 3a and 5a adjacent in a stack direction of carrier claws 10a and 10b to have the radiator fin 40a held on a set base 1.

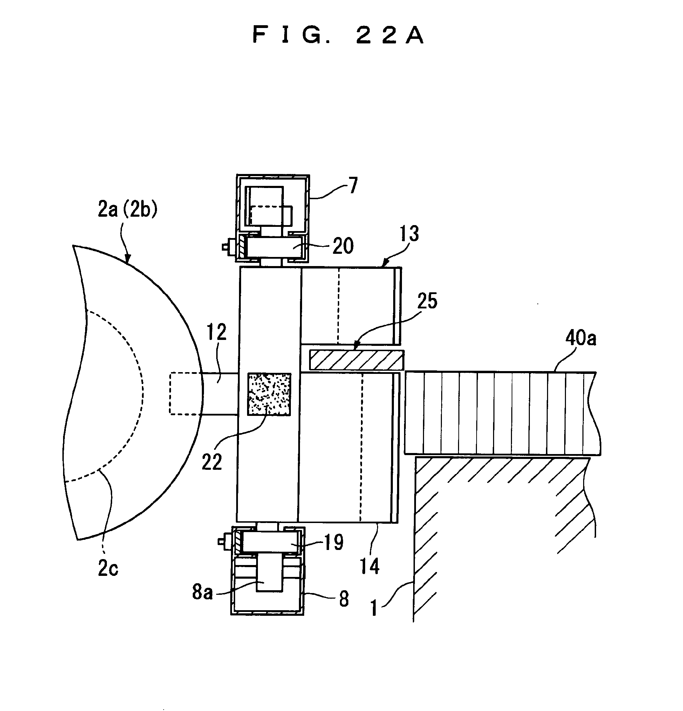

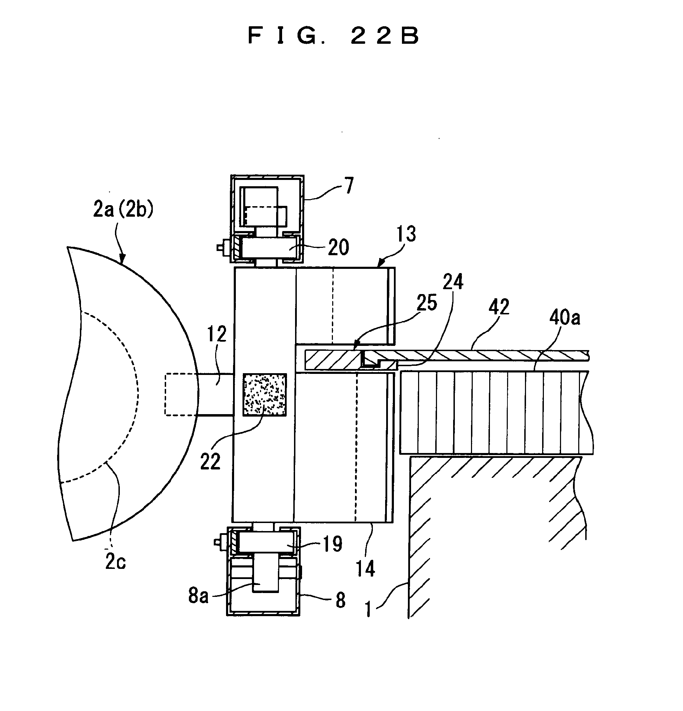

Next, as shown in FIG. 22A and FIG. 22B, at the back of the radiator fin feeder 40, the partition plate 42 comes to be positioned above the radiator fin 40a.

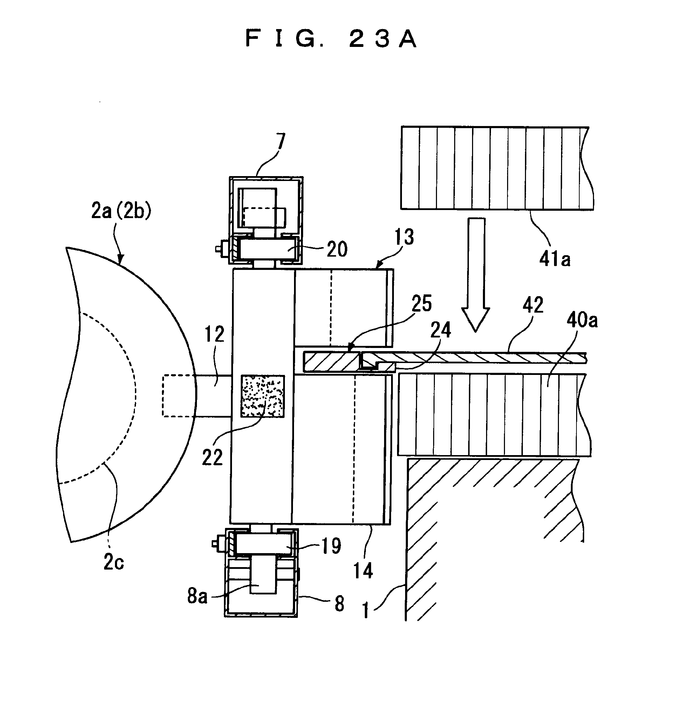

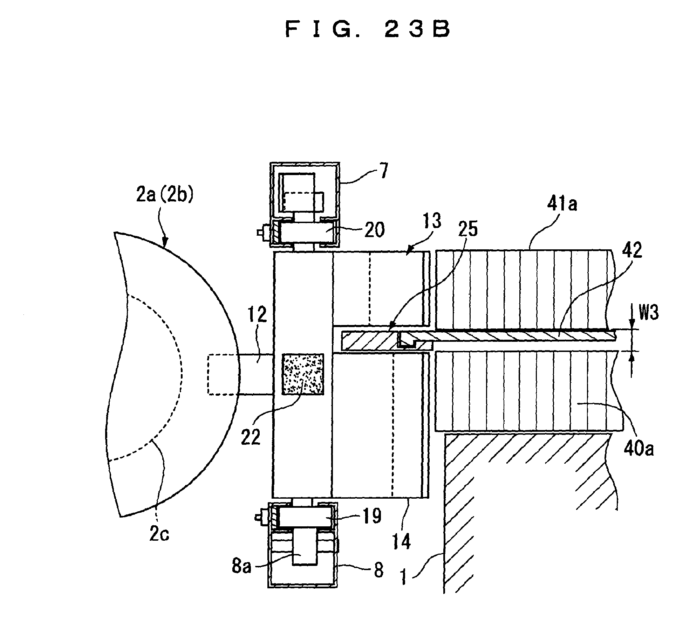

FIG. 23A and FIG. 23B show a condenser fin insertion process PR8. In this process, the condenser fin feeder 41 inserts the condenser fin 41 a from diagonally above to a space between the sets of tubes 3a and 5a adjacent in the stack direction of the carrier claws 10a and 10b to have the condenser fin 41 a held on the partition plate 42.

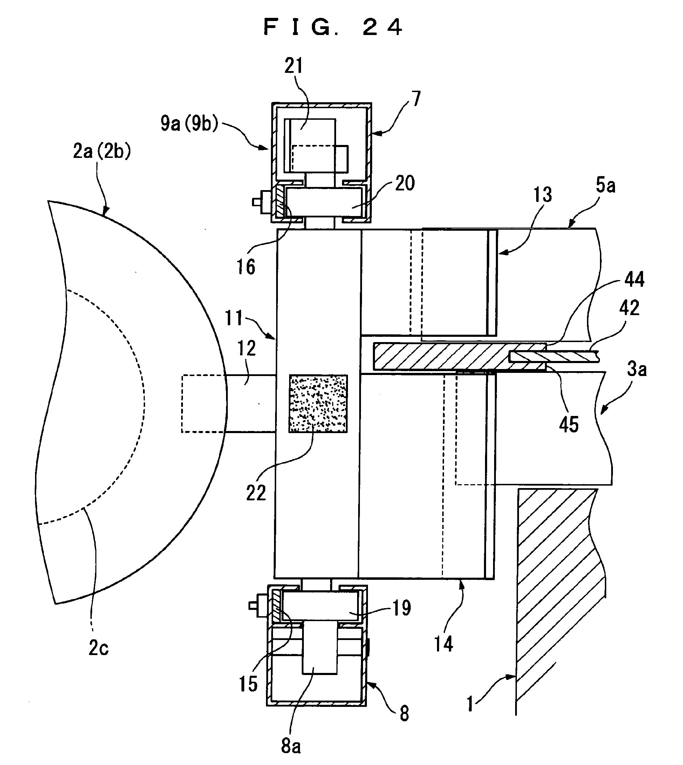

Incidentally, in order to compress the fins 40a, 41 a, the fin positioning parts 34 as described in the second embodiment may be provided. Another possible method is shown in FIG. 24. Specifically, an inner edge of the positioning guide 25 is divided into an upper and a lower end portion 44 and 45 which gradually protrude toward an inner side of a space between conveyer worms 2a and 2b. In this manner, the condenser fins 41a and the radiator fins 40a are compressed by the end portions 44 and 45 respectively.

Other processes are the same as those of the temporary assembly of the heat exchanger core of the first embodiment except that reinforces for the radiator core and for the condenser core are assembled after the condenser fin insertion process PR8, and therefore description thereof will be omitted.

Next, advantages of the third embodiment will be described.

The temporary assembly device of heat exchanger core of the third embodiment is applicable to the temporary assembly of a heat exchanger core of a type in which fins are not common to a first heat exchanger core and a second heat exchanger core.

Hitherto, the embodiments have been described, but the present invention is not limited to the embodiments described above. Any design change and so on without departing from the spirits of the present invention are considered as being embraced in the present invention.

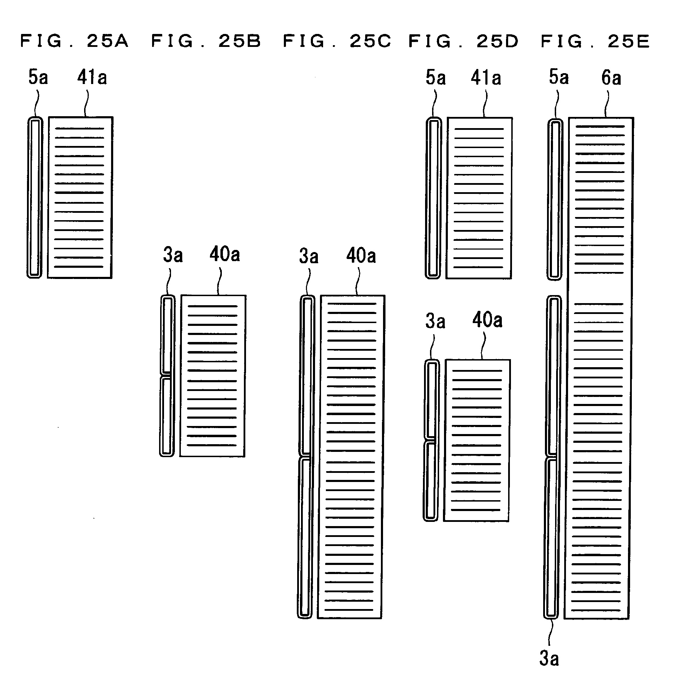

For example, the embodiments have described the temporary assembly of the heat exchanger core including the radiator core and the condenser core. However, the present invention is applicable to the temporary assembly of only one of the cores. Further, since the height of the upper face of the set base is adjustable, it is naturally possible to temporarily assemble and manufacture heat exchanger cores of various types. Examples of possible types are one having only a condenser core as shown in FIG. 25A, one having only a radiator core as shown in FIG. 25B, one in which radiator cores are different in thickness as shown in FIG. 25C, one in which a condenser core and a radiator core are apart from each other as shown in FIG. 25D, one in which common fins are used and radiator cores are different in thickness as shown in FIG. 25E, and so on.

## Claims

1. A temporary assembly device of a heat exchanger core which temporarily assembles a first heat exchanger core of a first heat exchanger and a second heat exchanger core of a second heat exchanger close to and integrally with each other, **characterized in that** the device comprises:
a pair of conveyer worms (2a, 2b) which are rotatably disposed in parallel on both sides of a set base (1) to face each other and to be a predetermined interval apart from each other, the conveyer worms having spiral recessed grooves (2c) extending in different spiral directions, respectively;
a plurality of carrier claws (10a, 10b) each of which includes an anchor part (12) slidable along the spiral recessed groove (2c) and an upper and a lower claw part (13, 14) being a predetermined interval apart from each other in a vertical direction, and the carrier claws (10a, 10b) being conveyed in a space between the pair of conveyer worms (2a, 2b) and stacked in pairs;
a first heat exchanger tube feeder (3) feeding a first heat exchanger tube;
positioning guides (25) each having a first protrusion (23) which is formed at a position corresponding to a back of the first heat exchanger tube feeder (3) to protrude from a space between the upper claw part (13) and the lower claw part (14) toward an inner side of a space between the pair of carrier claws (10a, 10b); and
a second heat exchanger tube feeder (5) feeding a second heat exchanger tube (5a), wherein
after the first heat exchanger tube feeder (3) feeds the first heat exchanger tube (3a) to the lower claw parts (14) of the pair of carrier claws (10a, 10b) to have the first heat exchanger tube (3 a) held on the set base (1), the second heat exchanger tube feeder (5) feeds the second heat exchanger tube (5a) to the upper claw parts (13) of the pair of carrier claws (10a, 10b) to have the second heat exchanger tube (5a) held on the first protrusions (23) of the positioning guides (25) so that the second heat exchanger tube (5a) is disposed immediately above and a predetermined interval apart from the first heat exchanger tube (3a), and the first heat exchanger core and the second heat exchanger core are temporarily assembled with the first heat exchanger tube (3a) and the second heat exchanger tube (5a) being stacked in two tiers.

2. The temporary assembly device of heat exchanger core according to claim 1, **characterized in that** said device further comprises
a fin feeder (6) feeding a fin (6a), wherein
the positioning guides (25) have second protrusions (24) which are formed at positions corresponding to a back of the fin feeder (6) and protrude from the spaces between the upper claw parts (13) and the lower claw parts (14) toward the inner side of the space between the pairs of carrier claws (10a, 10b), and wherein
after the fin feeder (6) feeds the fin (6a) to a space between sets of the first and second heat exchanger tubes (3a, 5a) adjacent in a stack direction of the pairs of carrier claws (10a, 10b), the second protrusions (24) compress the fin (6a) to a length that the fin (6a) should have at the time of the temporary assembly.

3. The temporary assembly device of heat exchanger core according to either claim 1 or claim 2, **characterized in that** said device further comprises
a conveyer unit (9a, 9b) which guides the pair of carrier claws (10a, 10b) to the space between the pair of conveyer worms (2a, 2b), and thereafter moves the carrier claws (10a, 10b) around the conveyer worms (2a, 2b) respectively to guide the carrier claws (10a, 10b) again to the space between the pair of conveyer worms (2a, 2b).

4. The temporary assembly device of heat exchanger core according to claim 3, **characterized in that**
the conveyer unit (9a, 9b) includes a carrier claw positioning part (15, 16) which controls movement trails of the pair of carrier claws (10a, 10b) in the space between the pair of conveyer worms (2a, 2b).

5. The temporary assembly device of heat exchanger core according to any one of claims 1 to 4, **characterized in that**
the positioning guides (30) are reciprocatably provided to move from the spaces between the upper claw parts (13) and the lower claw parts (14) of the pair of carrier claws (10a, 10b) toward the inner side of the space between the pair of carrier claws (10a, 10b), and wherein
end portions (31) of the positioning guides (30) protrude toward the inner side of the space between the pair of carrier claws (10a, 10b) at the back of the first heat exchanger tube feeder (3) to serve as the first protrusions (23), and protrude toward the inner side of the space between the pair of carrier claws (10a, 10b) at the back of the fin feeder (6) to serve as the second protrusions (24).

6. The temporary assembly device of heat exchanger core according to any one of claims 2 to 5, **characterized in that**
the fin feeder (6) is constituted of a first heat exchanger fin feeder (40) feeding a first heat exchanger fin (40a) and a second heat exchanger fin feeder (41) feeding a second heat exchanger fin (41a), and wherein
a partition plate (42) is provided at a back of the first heat exchange fin feeder (40) to be bridged between the second protrusions (24), and wherein
after the first heat exchanger fin feeder (40) feeds the first heat exchanger fin (40a) to a space between the sets of first and second heat exchanger tubes (3a, 5a) adjacent in the stack direction of the pairs of carrier claws (10a, 10b) to have the first heat exchanger fin (40a) held on the set base (1), the second heat exchanger fin feeder (41) feeds the second heat exchanger fin (41a) to the space between the sets of the first and second heat exchanger tubes (3a, 5a) adjacent in the stack direction of the pairs of carrier claws (10a, 10b) to have the second heat exchanger fin (41a) held on the partition plate (42) so that the second heat exchanger fin (41a) is disposed immediately above and a predetermined interval apart from the first heat exchanger fin (40a), and the first heat exchanger core and the second heat exchanger core are temporarily assembled with the first and second heat exchanger fins (40a, 41a) being stacked in two tiers.
